# EUROPEAN PATENT SPECIFICATION

(11) **EP 4 080 742 B1**
(45) Date of publication and mention of the grant of the patent: **06.05.2026**
(21) Application number: 20900782.2
(22) Date of filing: 08.12.2020
(51) Int. Cl.: H02K 5/08, H02K 15/142, H02K 15/123, H02K 21/16, H02K 1/14

(54) **MOLDED MOTOR PRODUCTION METHOD, AND MOLDED MOTOR**
VERFAHREN ZUR PRODUKTION EINES GEGOSSENEN MOTORS UND GEGOSSENER MOTOR
PROCÉDÉ DE FABRICATION DE MOTEUR MOULÉ ET MOTEUR MOULÉ

(30) Priority: 19.12.2019 JP 2019229011
(43) Date of publication of application: 26.10.2022
(73) Proprietor: Panasonic Intellectual Property Management Co., Ltd., Osaka-shi, Osaka 540-6207 (JP)
(72) Inventor: NANBU, Yasuo, Osaka-shi, Osaka 540-6207 (JP); AMAYA, Takanori, Osaka-shi, Osaka 540-6207 (JP); KOBAYASHI, Eiji, Osaka-shi, Osaka 540-6207 (JP); KAWABATA, Nobuhiro, Osaka-shi, Osaka 540-6207 (JP)
(74) Representative: SSM Sandmair
(86) International application number: PCT/JP2020/045582
(87) International publication number: WO 2021/124972

(56) References cited:
- EP-A1- 3 386 076
- EP-A2- 2 642 637
- WO-A1-2018/159537
- WO-A1-2018/159537
- WO-A1-2019/039204
- JP-A- 2014 225 945
- JP-A- 2017 135 854
- JP-A- 2018 074 770
- JP-A- 2018 074 770
- JP-A- 2018 117 428
- JP-A- 2018 117 428

## Description

### TECHNICAL FIELD

The present disclosure relates to a method of manufacturing a molded motor, and a molded motor.

### BACKGROUND ART

Conventionally, a molded motor in which a stator is covered with a molded resin is known (see PTL 1). The molded motor includes, for example, a stator having a stator core and a coil wound around the stator core, a rotor disposed inside the stator, and molded resin that covers the stator.

In recent years, with an increase in output of a molded motor, heat generation of a coil in a stator is increasing. Accordingly, there is a problem that the molded resin covering the stator is thermally deteriorated. Therefore, in order to suppress thermal deterioration of the molded resin, it has been proposed to use an epoxy resin containing a filler having high thermal conductivity as the molded resin (see PTL 2).

However, in a case where the coil abnormally generates heat due to, for example, an excessive current flowing through the coil of the stator, an insulator that insulates and covers the surface of a conductive wire forming a core wire of the coil melts, which may cause a layer short circuit in which the conductive wires of the coil wound around the stator core are short-circuited. Sparks may be generated when this layer short occurs.

At this time, if the coil is disconnected due to abnormal heat generation of the coil, the current does not flow through the coil, and no further trouble occurs. However, in the high-output molded motor, since a wire diameter of the coil of the stator is increased (for example, φ 0.3 mm or more), the coil is less likely to be disconnected even if the coil abnormally generates heat. Therefore, in the high-output molded motor, there is a high possibility that a spark is generated due to a layer short.

On the other hand, when the temperature inside the molded motor rises due to heat generation of the coil or the like, a combustible gas may be generated from a resin component such as an insulator interposed between the stator core and the coil.

When the combustible gas is present inside the molded motor as described above, if a layer short occurs and a spark is generated, the spark may ignite the gas and ignite.

In particular, when the combustible gas is generated in the vicinity of a lead bush, air (oxygen) flows into the vicinity of the lead bush, a spark is likely to occur between lead wires inserted into the lead bush, and the possibility of ignition is increased.

At this time, if the lead bush is made of a resin material, the lead bush is melted by ignition. When the lead bush melts as described above, there is a risk that the ignited fire leaks from a portion where the lead bush melts to the outside of the molded motor and spreads.

In addition, the fire that has ignited leaks not only from the vicinity of the lead bush but also from other parts of the molded resin. For example, when the molded resin is thermally deteriorated due to heat generation or the like of the coil, and a crack or the like is generated in the molded resin, there is a risk that the ignited fire leaks from a cracked portion of the molded resin to the outside of the molded motor, and as a result, the fire spreads.

Therefore, in order to prevent fire spread due to ignition caused by heat generation of a coil wound around a stator, a technique of covering the outside of the stator with a metal member over the entire outer periphery of the stator has been proposed.

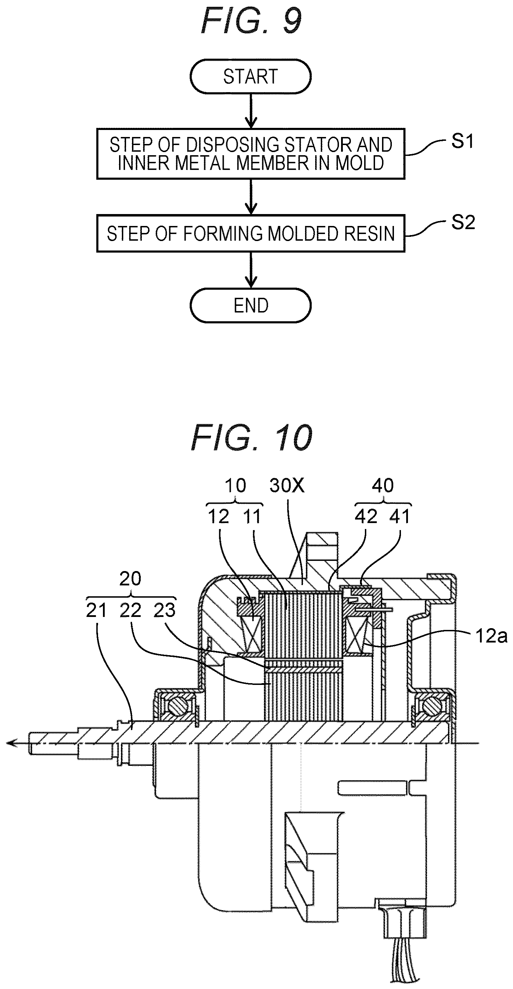

FIG. 10 is a half cross-sectional view of a molded motor of a comparative example. For example, as illustrated in FIG. 10, in a molded motor including stator 10 having stator core 11 and coil 12, rotor 20 having rotating shaft 21, rotor core 22, and permanent magnet 23, and molded resin 30X, it is conceivable to provide inner metal member 40 as a metallic inner cover inside molded resin 30X.

Inner metal member 40 illustrated in FIG. 10 is formed in an annular cylindrical shape having a step portion on an outer surface, and is disposed between molded resin 30X and stator 10. Specifically, annular cylindrical inner metal member 40 covers an outside of stator 10 over the entire circumference, and includes first portion 41 that is a large-diameter portion facing coil end 12a of coil 12 wound around stator core 11, and second portion 42 that is a small-diameter portion facing stator core 11 and having an outer diameter smaller than that of first portion 41.

However, when inner metal member 40 is provided so as to cover the outer side of stator 10, "su" is generated in molded resin 30X in a portion located on an outer side in a radial direction of inner metal member 40, and there is a possibility that the strength of molded resin 30X in the portion located on the outer side in the radial direction of inner metal member 40 is reduced.

In particular, when inner metal member 40 having first portion 41 having an outer diameter larger than that of second portion 42 is disposed between molded resin 30X and stator 10, a gap between an outer surface of inner metal member 40 and an inner surface of the mold is narrowed in a portion corresponding to first portion 41 having a large outer diameter. Therefore, "su" is easily generated in molded resin 30X in this portion, and a thin portion is generated in molded resin 30X in this portion. As a result, the strength of molded resin 30X further decreases.

WO2018159537A1 discloses: A molded motor according to the present invention is provided with a rotor, a stator, a pair of bearings, a pair of metal brackets, and a molded resin. The rotor has a rotating shaft extending in the axial direction and a rotating body that holds a permanent magnet and that is fixed to the rotating shaft. The stator: has a stator core in which a plurality of salient poles are formed, and a plurality of coils wound on the respective salient poles of the stator core with insulators interposed therebetween; is covered with the molded resin; and is disposed so as to face the rotor. The pair of metal brackets fix the respective bearings, and these bearings rotatably support the rotor. In addition, the rotating body has a dielectric layer formed between the rotating shaft and an outer circumferential surface of the rotating body. Furthermore, a metal member is provided in the circumferential direction at a site that is on the outer circumferential side of a coil end of the coils and that faces at least the coil end.

EP3386076A1 discloses: This motor is provided with: a stator provided with a stator core , and a coil which is wound around the stator core with an insulator therebetween; a moulded resin part which covers the stator ; a printed substrate which is disposed inside the moulded resin part ; and a lead bush for leading, out to the exterior, a lead wire having one end connected to the printed substrate . The lead bush is disposed so as to be offset in the axial direction with respect to the printed substrate . As a result, provided is a motor which is capable of inhibiting malfunctions caused by water ingress.

JP2018074770A discloses: In the state where an upper die and a lower die are combined, an outer peripheral side top surface and an outer peripheral side bottom surface are brought into contact with each other. A top surface and an inner peripheral side top surface constitute an inner peripheral side passage through which resin is introduced to an inner peripheral side of an inner wall. An outer peripheral surface and an opposing surface constitute an outer peripheral side passage through which the resin is introduced from an introduction surface to the inner peripheral side passage. When the resin is allowed to flow from the introduction surface to a metal mold in order to perform injection molding, the resin flows through the outer peripheral side passage along an axial direction from a rotor side to an anti-rotor side, furthermore flows through the inner peripheral side passage toward an inner peripheral side, and reaches above the armature and the side of the outer peripheral side. Therefore, the resin flown into the metal mold diverts in directions of pressing the armature from above.

JP2014225945A discloses: An end cover which closes an opening of a housing is composed of a first cover which closes an outer peripheral side portion of the opening and a second cover which closes an inner peripheral side portion. A resin injection port is provided at the first cover. In a resin molding step, a synthetic resin material is injected from the resin injection port into the housing to fill the housing and form a mold resin layer with the housing and the first cover being used as a part of a mold.

JP2018117428A discloses: A motor includes: a stator that has a cylindrical core body and teeth that radially inwardly protrude from an inner peripheral surface of the core body and on which wiring is wound, and in which the core body can be divided in a circumferential direction for each of the teeth; and a first resin housing for covering circumference of the stator such that at least an inner end in a radial direction of the teeth is exposed. The first resin housing includes a resin injection trace that is formed after a resin material is injected on an outer peripheral surface outside in a radial direction.

### Citation List

### Patent Literature

PTL 1: WO 2012/101976 A
PTL 2: Unexamined Japanese Patent Publication No. 2004-143368

### SUMMARY OF THE INVENTION

The present disclosure has been made to solve such a problem, and an object of the present disclosure is to provide a method of manufacturing a molded motor and a molded motor capable of suppressing a decrease in strength of a molded resin and the like even when an inner metal member is disposed so as to cover an outer side of a stator.

In order to achieve the above object, one aspect of a method of manufacturing a molded motor according to claim 1 of the present disclosure includes a step of disposing, in a mold, a stator including a stator core and a coil wound around the stator core, and an inner metal member disposed so as to cover an outer side of the stator, and a step of forming a molded resin by injecting a liquid resin into the mold through a resin injection portion provided in the mold, and curing the liquid resin, in which the resin injection portion is located in a radial direction of the molded resin after molding.

Furthermore, the molded resin after molding includes a protruding portion protruding outward in a radial direction orthogonal to a central axis direction of a rotating shaft of the molded motor, and the resin injection portion may be provided in a portion corresponding to the protruding portion.

Further, it is preferable that the stator is pressed by a pin from an upper side to a lower side in a vertical direction during injection of the liquid resin.

The inner metal member may include, in the radial direction, a first portion located outside the stator, and a second portion located outside the stator and having a distance to the rotating shaft smaller than a distance from the first portion to the rotating shaft.

Preferably, the coil includes a coil end protruding from the stator core in a direction along the central axis direction, the first portion faces the coil end, and the second portion faces the stator core.

One aspect of a molded motor according to claim 5 of the present disclosure includes a stator including a stator core and a coil wound around the stator core, a rotor disposed opposite to the stator and including a rotating shaft extending in a central axis direction, a molded resin covering the stator, and an inner metal member including a first portion located outside the stator in a radial direction orthogonal to the central axis direction and a second portion located outside the stator in the radial direction and having a distance to the rotating shaft smaller than a distance from the first portion to the rotating shaft, the inner metal member including a portion located between the molded resin and the stator, in which the molded resin is formed by curing a liquid resin injected from the radial direction.

Furthermore, a gate mark when the liquid resin is injected to mold the molded resin may be present at a portion on a side of the molded resin in the radial direction.

Further, the molded resin includes a protruding portion protruding outward in the radial direction, and the molded resin may be formed by curing the liquid resin injected from the protruding portion.

In addition, a gate mark when the liquid resin is injected to mold the molded resin may be present in the protruding portion.

Further, the molded motor may further include a bracket fixed to the molded resin, and the bracket may include a first side wall portion that covers a side surface of the molded resin, and at least a part of an outer surface of the molded resin corresponding to the first portion is flush with an outer surface of the first side wall portion of the bracket or located inside the outer surface of the first side wall portion.

Further, the molded motor may further include an outer metal member including a lid portion that covers an outer surface of the molded resin located on a side of the central axis direction and a second side wall portion that covers a part of the outer surface of the molded resin located on a side of the radial direction, and out of the outer surface of the molded resin located on the side of the radial direction, at least a part of the outer surface that is not covered with the second side wall portion is flush with an outer surface of the second side wall portion of the outer metal member or located inside the outer surface of the second side wall portion.

The thickness of the molded resin in a part corresponding to the first portion is preferably 1 mm or more.

The molded resin may be made of an unsaturated polyester resin.

According to the present disclosure, even when the inner metal member is disposed so as to cover the outside of the stator, it is possible to suppress a decrease in strength of the molded resin.

### BRIEF DESCRIPTION OF THE DRAWINGS

FIG. 1 is a perspective view of a molded motor according to an exemplary embodiment.
FIG. 2 is an exploded perspective view of the molded motor according to the exemplary embodiment.
FIG. 3 is a half cross-sectional view of the molded motor according to the exemplary embodiment.
FIG. 4 is a cross-sectional view of the molded motor according to the exemplary embodiment taken along line IV-IV in FIG. 3.
FIG. 5 is a top view of the molded motor according to the exemplary embodiment.
FIG. 6 is a perspective view of an inner metal member in the molded motor according to the exemplary embodiment.
FIG. 7 is a diagram for explaining a step of disposing a stator and the inner metal member in a method of manufacturing the molded motor according to the exemplary embodiment.
FIG. 8A is a diagram for describing a step of injecting a liquid resin into a mold in the method of manufacturing the molded motor according to the exemplary embodiment.
FIG. 8B is a diagram for describing the step of injecting the liquid resin into the mold in the method for manufacturing the molded motor according to the exemplary embodiment.
FIG. 8C is a diagram for describing the step of injecting the liquid resin into the mold in the method for manufacturing the molded motor according to the exemplary embodiment.
FIG. 9 is a flowchart illustrating the method of manufacturing the molded motor according to the exemplary embodiment.
FIG. 10 is a half cross-sectional view of a molded motor of a comparative example.

### DESCRIPTION OF EMBODIMENT

Hereinafter, an exemplary embodiment of the present disclosure will be described. The following exemplary embodiment illustrates a specific example of the present disclosure. Therefore, numerical values, constituent elements, arrangement positions and connection modes of the constituent elements, steps, order of the steps, and the like shown in the following exemplary embodiment are merely examples, and are not intended to limit the present disclosure. Thus, among the constituent elements in the following exemplary embodiment, constituent elements that are not described in independent claims indicating the highest concept of the present disclosure are described as optional constituent elements.

Each of the drawings is a schematic diagram, and is not necessarily strictly illustrated. In addition, in each drawing, substantially the same configurations are denoted by the same reference marks to eliminate or simplify duplicated description.

### (Exemplary embodiment)

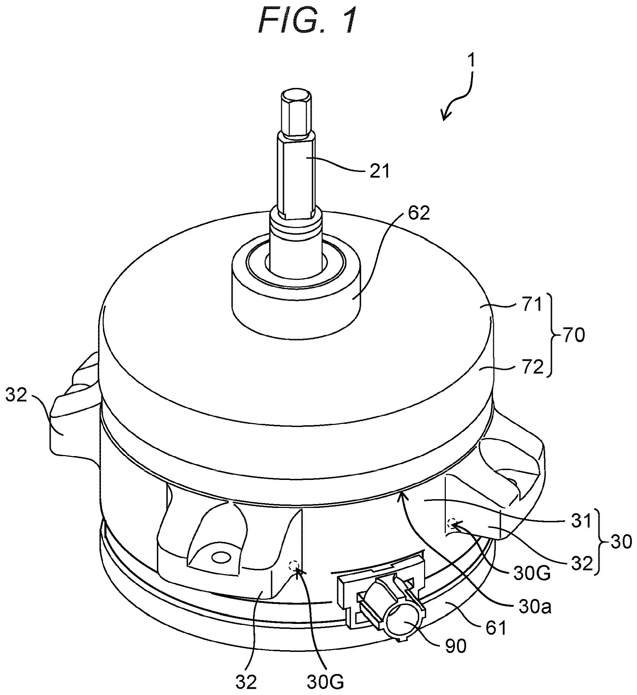

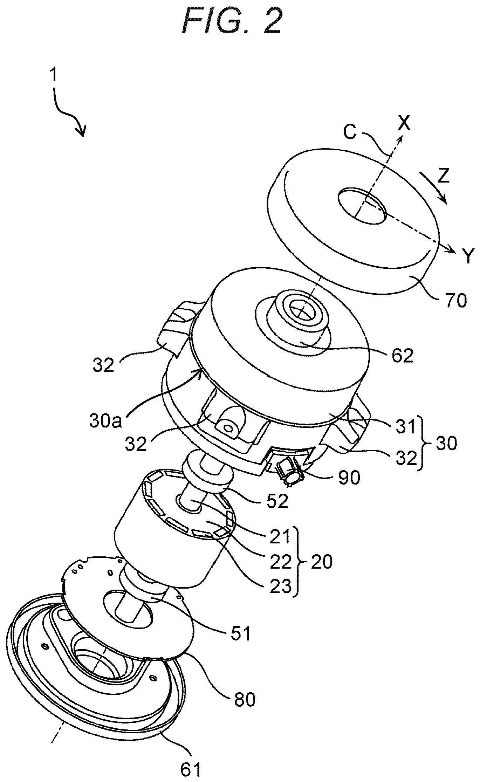

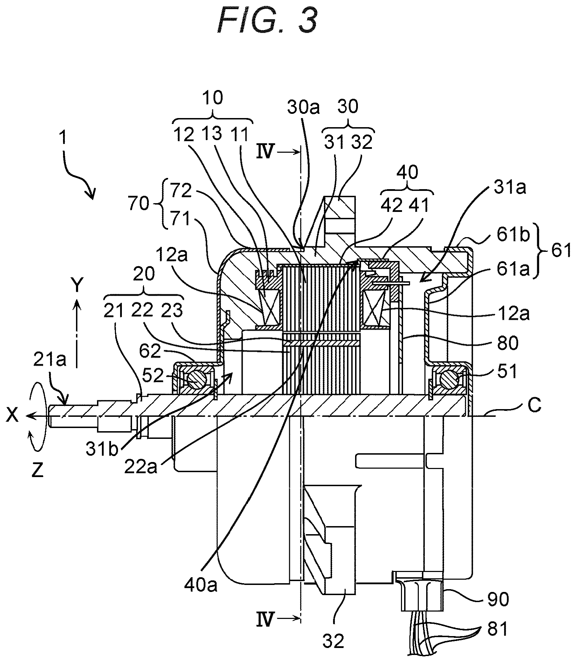

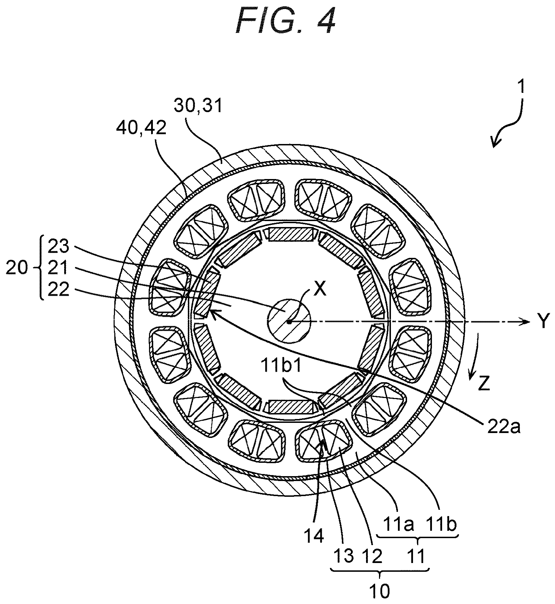

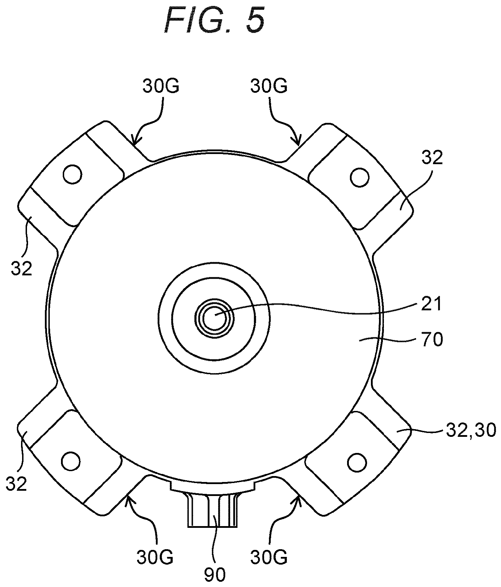

A configuration of molded motor 1 according to an exemplary embodiment will be described with reference to FIGS. 1 to 5. FIG. 1 is a perspective view of molded motor 1 according to the exemplary embodiment. FIG. 2 is an exploded perspective view of molded motor 1 according to the exemplary embodiment. FIG. 3 is a half cross-sectional view of molded motor 1 according to the exemplary embodiment. FIG. 4 is a cross-sectional view of molded motor 1 according to the exemplary embodiment taken along line IV-IV in FIG. 3. FIG. 5 is a top view of molded motor 1 according to the exemplary embodiment. Note that, in FIGS. 2 to 4, a direction in which rotating shaft 21 of molded motor 1 extends is defined as axial direction X. In a plane orthogonal to axial direction X, a direction extending from central axis C about central axis C of rotating shaft 21 is defined as radial direction Y. A direction that orbits central axis C with central axis C as a center is defined as circumferential direction Z. Axial direction X is a direction (central axis direction) of central axis C of rotating shaft 21. That is, axial direction X is a longitudinal direction of rotation shaft 21. Radial direction Y is a direction orthogonal to a direction of central axis C of rotating shaft 21. In the present specification, axial direction X is a first direction, and radial direction Y is a second direction orthogonal to the first direction.

As illustrated in FIGS. 1 to 5, molded motor 1 includes stator 10, rotor 20 disposed to face stator 10, molded resin 30 covering stator 10, and inner metal member 40 having a portion located between molded resin 30 and stator 10.

Molded motor 1 further includes first bearing 51 and second bearing 52, first bracket 61 and second bracket 62, outer metal member 70, circuit board 80, and lead bush 90.

In molded motor 1, molded resin 30, first bracket 61, second bracket 62, and outer metal member 70 constitute an outline of molded motor 1.

Molded motor 1 according to the present exemplary embodiment is a brushless motor that does not use a brush. Furthermore, molded motor 1 is an inner rotor type motor in which rotor 20 is disposed inside stator 10.

As illustrated in FIGS. 3 and 4, stator 10 (stator) is disposed so as to surround rotor 20 with a minute air gap interposed between the stator and rotor 20. Stator 10 includes stator core (stator iron core) 11, coil 12, and insulator 13.

Stator core 11 is an annular iron core that generates a magnetic force for rotating rotor 20. As illustrated in FIG. 3, stator core 11 is, for example, a stacked body in which a plurality of electromagnetic steel sheets are stacked in a longitudinal direction (axial direction X) of rotating shaft 21 of rotor 20. Note that stator core 11 is not limited to the stacked body, and may be a bulk body made of a magnetic material.

As illustrated in FIG. 4, stator core 11 includes yoke 11a annularly formed so as to surround rotor 20, and a plurality of teeth 11b protruding from yoke 11a in a convex shape toward rotating shaft 21. Stator core 11 is provided with 12 teeth 11b.

Yoke 11a is a back yoke formed outside each of teeth 11b. Yoke 11a is formed in an annular shape centered on central axis C.

The plurality of teeth 11b are arranged at equal intervals in circumferential direction Z while forming slots 14, which are opening portions, between adjacent teeth. Further, extending portion 11b1 extending to both sides in circumferential direction Z is formed at an extended tip portion of each of teeth 11b. An inner peripheral surface located at a tip end portion of teeth 11b including extending portion 11b1 is a magnetic pole surface facing an outer peripheral surface of rotor 20. In addition, in two adjacent teeth 11b, there is a gap (slot opening) between extending portion 11b1 of one tooth 11b and extending portion 11b1 of another tooth 11b. Note that, in the present exemplary embodiment, stator core 11 is provided with 12 teeth 11b. The number of slots 14 is 12. That is, the number of the slots of molded motor 1 is 12.

Coil 12 is wound around stator core 11. Coil 12 is a winding coil wound around stator core 11 via insulator 13. Specifically, as illustrated in FIG. 4, coil 12 is wound around each of the plurality of teeth 11b of stator core 11.

As illustrated in FIG. 3, each coil 12 has a coil end 12a protruding from stator core 11 in axial direction X (first direction) of rotating shaft 21. That is, coil ends 12a are portions of coils 12 wound around teeth 11b of stator core 11, which protrude from stator core 11 (teeth 11b) in axial direction X. Coil ends 12a protrude from stator core 11 to both sides in axial direction X of rotating shaft 21. Therefore, each of teeth 11b includes coil end 12a (first coil end) located on a side of output shaft 21a, and coil end 12a (second coil end) located on a side opposite to the side of output shaft 21a.

Molded motor 1 is a high-output motor having an output of 750W or more. Therefore, as coil 12, a coil having a wire diameter φ of 0.3 mm or more is used. As an example, the wire diameter φ of coil 12 is 0.5 mm to 1.0 mm.

The plurality of coils 12 are configured by unit coils of three phases of a U phase, a V phase, and a W phase electrically different from each other by 120 degrees. That is, coils 12 wound around teeth 11b are energized and driven by three-phase alternating currents energized in units of phases of the U phase, the V phase, and the W phase, respectively. Note that coils 12 of the respective phases are connected by transition wires (not illustrated). The transition wire is disposed on an outer peripheral wall portion or the like of insulator 13. Coil 12 and the transition wire are, for example, insulating coated wires configured by a conductive wire forming a core wire, and an insulator insulating and coating a surface of the conductive wire.

An end of coil 12 of each phase is connected by a winding connection portion of circuit board 80. Specifically, pattern wiring for electrically connecting the plurality of coils 12 is formed on circuit board 80 for each phase of the U phase, the V phase, and the W phase, and the end of coil 12 of each phase is electrically connected to the pattern wiring of circuit board 80 by solder or the like. Note that circuit board 80 has an opening through which rotating shaft 21 freely passes in a central portion, and has, for example, an annular shape (donut shape), a fan shape (arc shape), a C shape, or the like.

Alternatively, a terminal of coil 12 of each phase may use a connection member made of a conductive material in addition to a configuration using a circuit board. Note that the present disclosure can be applied to any structure as long as the lead wire is inserted into a housing of the motor regardless of the specifications of the motor.

Insulator 13 is an insulating frame that covers stator core 11. Specifically, insulator 13 covers teeth 11b of stator core 11, and is provided for each tooth 11b. Insulator 13 is made of, for example, an insulating resin material such as polybutylene terephthalate (PBT).

Rotor 20 (rotor) rotates by a magnetic force generated in stator 10. As illustrated in FIGS. 2 to 4, rotor 20 has rotating shaft 21 extending in a direction of central axis C, and rotates about central axis C of rotating shaft 21 as a rotation center. Rotating shaft 21 extends along axial direction X.

Rotor 20 has a configuration in which a plurality of N poles and S poles are repeatedly present in circumferential direction Z. Rotor 20 is a permanent magnet embedded rotor (interior permanent magnet (IPM) rotor), and includes rotor core (rotor iron core) 22, and permanent magnet 23 inserted into each of a plurality of magnet insertion holes 22a formed in rotor core 22.

As illustrated in FIG. 3, rotor core 22 is a substantially cylindrical stacked body in which a plurality of electromagnetic steel sheets are stacked along axial direction X of rotating shaft 21. As illustrated in FIG. 4, the plurality of magnet insertion holes 22a penetrating in axial direction X are formed in rotor core 22 at equal intervals in circumferential direction Z. Permanent magnets 23 are inserted into magnet insertion holes 22a one for each. In the present exemplary embodiment, the number of magnetic poles is 10, and 10 permanent magnets 23 are arranged such that the S poles and the N poles are alternately located in circumferential direction Z.

Rotating shaft 21 is fixed to a center of rotor core 22. Rotating shaft 21 is, for example, a shaft such as a metal rod, and penetrates rotor core 22 so as to extend to both sides of rotor core 22. Rotating shaft 21 is fixed to rotor core 22 by, for example, press-fitting or shrink-fitting into a center hole of rotor core 22.

As illustrated in FIG. 3, rotating shaft 21 is held by first bearing 51 and second bearing 52. Accordingly, rotor 20 is rotatable with respect to stator 10. As an example, first bearing 51 and second bearing 52 are bearings that rotatably support rotating shaft 21. Note that rotating shaft 21 penetrates first bearing 51, and although not illustrated, a load such as a rotating fan is attached to a portion of rotating shaft 21 protruding from first bearing 51 to the outside. In rotating shaft 21, a part to which a load such as a rotating fan is attached is also referred to as output shaft 21a.

Rotor 20 configured as described above is rotated by a magnetic flux generated in stator 10. Specifically, when power is supplied from circuit board 80 to coil 12 of stator 10, a field current flows through coil 12, and a magnetic flux is generated in stator core 11. A magnetic force generated by the interaction between the magnetic flux generated in stator core 11 and the magnetic flux generated from permanent magnet 23 included in rotor 20 becomes a torque for rotating rotor 20, and rotor 20 rotates.

As illustrated in FIG. 3, stator 10 is covered with molded resin 30. Molded resin 30 covers an outer portion of stator 10 over the entire circumference of stator 10 in circumferential direction Z. Specifically, molded resin 30 covers the outer portions of stator core 11, coil 12, and insulator 13. Molded resin 30 is in contact with outer surfaces of coil 12 and insulator 13.

Molded resin 30 further covers inner metal member 40. Specifically, molded resin 30 covers an outer portion of inner metal member 40 over the entire circumference of inner metal member 40 in circumferential direction Z. Molded resin 30 is in contact with the entire outer surface of inner metal member 40.

Stator 10 and inner metal member 40 are fixed to molded resin 30. Stator 10 and inner metal member 40 are integrated together with molded resin 30.

Molded resin 30 is made of an insulating resin material having excellent thermal conductivity, such as a polyester resin or an epoxy resin. Molded resin 30 is made of a thermosetting resin. In the present exemplary embodiment, molded resin 30 is made of unsaturated polyester that is a thermosetting resin. Specifically, molded resin 30 is made of white bulk molding compound (BMC) unsaturated polyester resin.

Molded resin 30 constitutes a housing that is a part of an outer shell of molded motor 1. That is, molded resin 30 covering stator 10 constitutes the housing enclosing rotor 20.

As illustrated in FIGS. 1 to 5, molded resin 30 includes main body 31 constituting a body of molded motor 1, and protruding portions 32 provided in main body 31. A plurality of protruding portions 32 are provided in main body 31. Specifically, as illustrated in FIG. 5, four protruding portions 32 are provided at equal intervals in circumferential direction Z. Main body 31 and protruding portions 32 are integrally formed by molding to form one molded resin 30.

As illustrated in FIG. 3, main body 31 covers stator 10. Specifically, main body 31 covers stator core 11, coil 12, insulator 13, and inner metal member 40. Main body 31 is a cylindrical body including first opening 31a located at one end in axial direction X, and second opening 31b located at the other end in axial direction X.

Protruding portion 32 protrudes outward in radial direction Y. Specifically, protruding portion 32 protrudes from an outer surface of main body 31. Protruding portion 32 protrudes outward along radial direction Y from the side surface of main body 31. Protruding portion 32 is a leg portion of molded motor 1. Protruding portion 32 functions as an attachment portion for attaching molded motor 1 to an external device or the like. Protruding portion 32 is provided with a through hole through which a screw or the like is inserted.

As illustrated in FIGS. 2 and 3, step part 30a is formed on the outer surface of molded resin 30 over the entire circumference in circumferential direction Z. Step part 30a is formed in main body 31. Therefore, main body 31 includes a large diameter portion having a large outer diameter, and a small diameter portion having an outer diameter smaller than that of the large diameter portion with step part 30a as a boundary. That is, in main body 31, an outer surface of the large diameter portion is positioned outside an outer surface of the small diameter portion. The large diameter portion of main body 31 is located on a side opposite to a side of output shaft 21a, and the small diameter portion of main body 31 is located on a side of output shaft 21a. The step width of step part 30a is, for example, about a few tenths of a millimeter. As an example, the step width of step part 30a is 1 mm or less, for example, 0.5 mm.

As illustrated in FIGS. 1 and 5, gate marks 30G are present in molded resin 30 formed by molding. Gate mark 30G is formed at a connection portion between a gate and a resin molded article (molded resin 30) when a liquid resin is injected into the mold at the time of molding molded resin 30. Gate mark 30G is formed at a portion on a side of molded resin 30 in radial direction Y. That is, molded resin 30 is formed by curing the liquid resin injected from radial direction Y.

Gate mark 30G at the time of injecting the liquid resin and molding molded resin 30 is present in protruding portion 32. That is, molded resin 30 is formed by curing the liquid resin injected from protruding portion 32. More specifically, gate mark 30G exists at a base part of protruding portion 32. As illustrated in FIG. 5, one gate mark 30G exists in each of the plurality of protruding portions 32.

Note that gate mark 30G may remain even when a surface of molded resin 30 is polished. However, the surface of molded resin 30 may be polished such that gate mark 30G does not remain at all. Even when the surface of molded resin 30 is polished to make it difficult to recognize gate mark 30G, it is possible to confirm a path through which the liquid resin is injected by confirming the density or orientation of components contained in the liquid resin at the time of forming molded resin 30, for example, fillers.

As illustrated in FIG. 3, first bracket 61 is provided at one end of molded resin 30 in axial direction X. Second bracket 62 is provided at the other end of molded resin 30 in axial direction X. First bracket 61 holds first bearing 51. First bearing 51 is fixed to a recess of first bracket 61. Furthermore, second bracket 62 holds second bearing 52. Second bearing 52 is fixed to second bracket 62.

First bracket 61 is disposed so as to close first opening 31a of main body 31. Second bracket 62 is disposed so as to close second opening 31b of main body 31. First bracket 61 includes lid portion 61a that closes first opening 31a of main body 31, and first side wall portion 61b that covers a side surface of molded resin 30. Lid portion 61a of first bracket 61 is a bottom surface portion that covers a bottom surface of molded resin 30. Lid portion 61a covers the entire outer surface of molded resin 30 located on a side of a direction of central axis C. First side wall portion 61b of first bracket 61 covers a part on a side of a bottom surface out of the outer surface of molded resin 30 located on a side of radial direction Y. First side wall portion 61b is provided over the entire circumference of the side surface of molded resin 30.

On the other hand, second bracket 62 includes a lid portion that closes second opening 31b of main body 31. However, the second bracket does not cover the side surface of molded resin 30, and does not have a portion corresponding to first side wall portion 61b of first bracket 61. Therefore, the entire outer diameter of second bracket 62 is smaller than the entire outer diameter of first bracket 61. That is, the outer size of first bracket 61 is larger than that of second bracket 62.

First bracket 61 and second bracket 62 are made of, for example, a metal material such as iron. For example, first bracket 61 and second bracket 62 are made of a metal plate having a constant thickness. First bracket 61 and second bracket 62 are fixed to molded resin 30. Specifically, second bracket 62 is fixed to molded resin 30 together with stator 10 when stator 10 is molded with resin. On the other hand, first bracket 61 is fixed to molded resin 30 after molding.

As illustrated in FIGS. 1 to 4, lead bush 90 is attached to molded resin 30. Lead bush 90 is a cylindrical member. As illustrated in FIG. 3, electric wire 81 connected to circuit board 80 is inserted into lead bush 90. Lead bush 90 functions as a pull-out portion for pulling out electric wire 81 to the outside, and also functions as a protection portion for protecting electric wire 81. Lead bush 90 is attached to molded resin 30 by being inserted into an opening formed in a part of the outer wall portion of molded resin 30. Lead bush 90 is made of a resin material such as polybutylene terephthalate (PBT) or a non-metallic material such as ceramic.

Electric power for energizing coil 12 wound around stator 10 is supplied to electric wire 81. That is, electric power is supplied to circuit board 80 via electric wire 81. Electric wire 81 is a power supply line, for example, a lead wire. Electric wire 81 includes three lead wires. Note that, as described above, electric power for directly or indirectly energizing coil 12 is supplied to electric wire 81. In addition, a signal for controlling molded motor 1 may be supplied to electric wire 81 from a control device outside molded motor 1.

As illustrated in FIG. 3, inner metal member 40 fixed to molded resin 30 is a metallic inner cover (first metal cover) disposed inside molded resin 30. Specifically, at least a part of inner metal member 40 is disposed between molded resin 30 and stator 10. In the present exemplary embodiment, entire inner metal member 40 is disposed between molded resin 30 and stator 10.

Inner metal member 40 is formed of a metal plate having a constant thickness. The thickness of inner metal member 40 is, for example, several mm or less. In the present exemplary embodiment, inner metal member 40 is made of a galvanized steel plate having a thickness of 0.5 mm. The material and thickness of inner metal member 40 are not limited thereto.

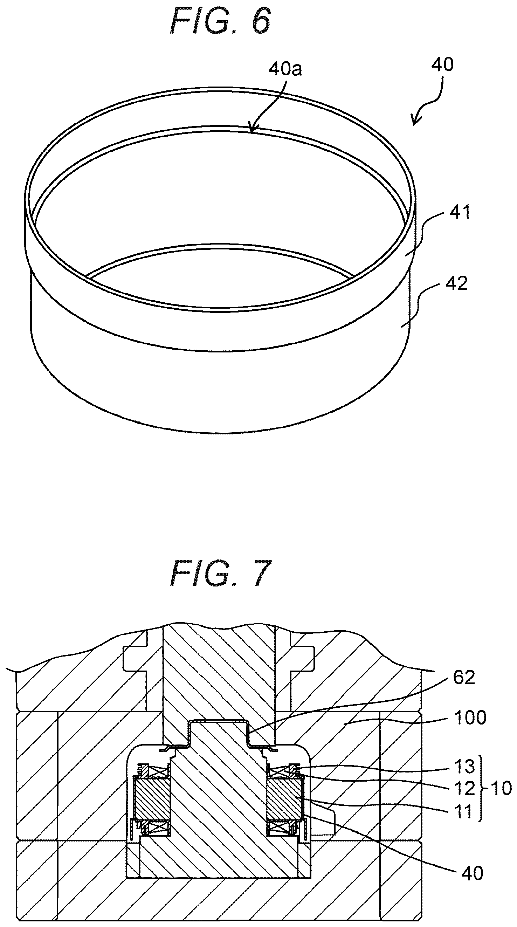

Here, the structure of inner metal member 40 will be described with reference to FIG. 6 while referring to FIG. 3. FIG. 6 is a perspective view of inner metal member 40 in molded motor 1 according to the exemplary embodiment.

As illustrated in FIG. 6, inner metal member 40 is a cylindrical body having an annular cylindrical shape having step part 40a on the outer surface, and having both sides opened. The step width of step part 40a is, for example, about a few tenths of a millimeter. As an example, the step width of step part 40a is 1 mm or less, for example, 0.5 mm. As illustrated in FIGS. 3 and 6, inner metal member 40 includes annular cylindrical first portion 41 that is a large diameter portion having a large outer diameter, and annular cylindrical second portion 42 having an outer diameter smaller than that of first portion 41 with step part 40a as a boundary. That is, as illustrated in FIG. 3, first portion 41, which is the large diameter portion, is located outside stator 10 in radial direction Y, and has a distance to rotating shaft 21 larger than a distance from second portion 42 to rotating shaft 21, and is located outside second portion 42. In other words, second portion 42, which is the small diameter portion, is located outside stator 10 in radial direction Y, and has a distance to rotating shaft 21 smaller than a distance from first portion 41 to rotating shaft 21, and is located inside first portion 41.

Annular cylindrical inner metal member 40 surrounds stator 10 from an outside over the entire circumference in circumferential direction Z. That is, first portion 41 and second portion 42 of inner metal member 40 are located outside stator 10. Inner metal member 40 as a whole surrounds coil end 12a located on a side opposite to a side of output shaft 21a, insulator 13, and stator core 11.

Specifically, first portion 41 of inner metal member 40 is located on the outer side in radial direction Y of coil end 12a located on the side opposite to the side of output shaft 21a. That is, first portion 41 faces coil end 12a located on the side opposite to the side of output shaft 21a. First portion 41 is disposed away from coil end 12a located on the side opposite to the side of output shaft 21a.

Second portion 42 of inner metal member 40 is located outside stator core 11 in radial direction Y. That is, second portion 42 faces stator core 11. Second portion 42 is in contact with the side surface of stator core 11. Note that the length of second portion 42 in axial direction X is longer than the length of first portion 41 in axial direction X, but is not limited to this.

As illustrated in FIGS. 1 and 3, outer metal member 70 is also fixed to molded resin 30. Outer metal member 70 is a metallic outer cover (second metal cover) disposed outside molded resin 30. Specifically, outer metal member 70 covers the outer surface of molded resin 30. Outer metal member 70 is mounted on a side of second bracket 62 (a side of output shaft 21a) of molded resin 30.

Outer metal member 70 surrounds coil end 12a located on a side of output shaft 21a, and insulator 13. Outer metal member 70 has a cup shape having an opening portion at the center. Outer metal member 70 includes disk-shaped lid portion 71 having an opening portion, and annular second side wall portion 72 erected on an outer peripheral end portion of the lid portion. Lid portion 71 of outer metal member 70 is a top surface portion that covers the top surface of molded resin 30. Lid portion 71 covers the entire outer surface of molded resin 30 located on a side of a direction of central axis C. Second side wall portion 72 of outer metal member 70 covers a part on a side of a top surface out of the outer surface located on a side of radial direction Y of molded resin 30. Second side wall portion 72 has a cylindrical shape and is provided over the entire circumference of the side surface of molded resin 30. A part of second bracket 62 is configured to pass through the opening portion of outer metal member 70.

Outer metal member 70 is formed of a metal plate having a constant thickness. The thickness of outer metal member 70 is, for example, several mm or less. In the present exemplary embodiment, outer metal member 70 is made of a galvanized steel plate having a thickness of 0.5 mm. Note that the material and thickness of outer metal member 70 are not limited thereto.

As described above, in molded motor 1 according to the present exemplary embodiment, one of coil ends 12a protruding to both sides in axial direction X is covered with inner metal member 40. As a result, even when fire is generated inside molded resin 30 due to a layer short or the like, the fire can be blocked by inner metal member 40. Therefore, it is possible to prevent fire from leaking to the outside of molded motor 1 and spreading.

Further, in molded motor 1 according to the present exemplary embodiment, the other of coil ends 12a protruding to both sides in axial direction X is covered with outer metal member 70. As described above, by providing outer metal member 70 in addition to inner metal member 40, fire generated inside molded resin 30 can be blocked also by outer metal member 70. Therefore, it is possible to further prevent fire from leaking to the outside of molded motor 1 and spreading.

Out of inner metal member 40 and outer metal member 70, only inner metal member 40 may be provided. However, by providing both inner metal member 40 and outer metal member 70, it is possible to reliably prevent fire from being ejected to the outside of molded motor 1.

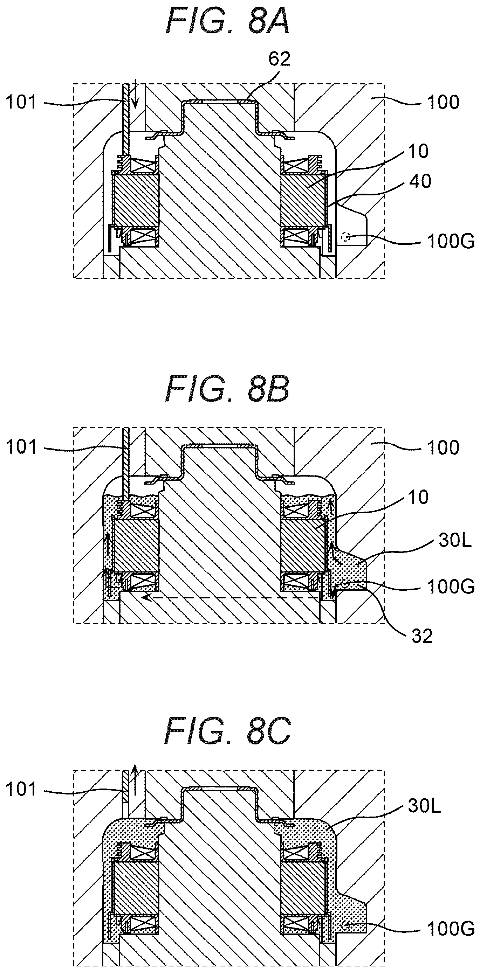

Next, a method of manufacturing molded motor 1 according to the exemplary embodiment will be described with reference to FIGS. 7 to 9. FIG. 7 is a view for explaining a step of disposing stator 10 and inner metal member 40 in the method of manufacturing molded motor 1 according to the exemplary embodiment. FIGS. 8A, 8B, and 8C are diagrams for explaining a step of injecting liquid resin 30L into mold 100 in the manufacturing method. FIG. 9 is a flowchart illustrating the method of manufacturing molded motor 1 according to the exemplary embodiment.

First, as illustrated in FIGS. 7 and 9, stator 10 including stator core 11 around which coil 12 is wound via insulator 13, and inner metal member 40 disposed so as to cover the outside of stator 10 are disposed in mold 100 of an injection molding machine. At this time, second bracket 62 is also disposed (step S1).

Mold 100 includes a plurality of blocks. The injection molding machine in the present exemplary embodiment is a vertical type. Therefore, mold 100 is configured to open and close in a longitudinal direction.

Next, as illustrated in FIGS. 8A, 8B, 8C, and 9, liquid resin 30L is injected into mold 100 through gate 100G provided in mold 100 as a resin injection portion to cure liquid resin 30L, thereby forming molded resin 30 (step S2).

Specifically, first, as illustrated in FIG. 8A, after stator 10, inner metal member 40, and second bracket 62 are disposed in mold 100, pin 101, which is a pin-back pin, is lowered before liquid resin 30L is injected into mold 100. Stator 10 is pressed from an upper side to a lower side in a vertical direction by pin 101. Pin 101 is provided on a side of output shaft 21a, and presses insulator 13 from the side of output shaft 21a.

Next, as illustrated in FIG. 8B, liquid resin 30L is injected into mold 100 from gate 100G in a state where stator 10 is pressed from above by pin 101. In the present exemplary embodiment, liquid resin 30L is injected by a side gate method in which liquid resin 30L is injected from the side of molded resin 30 to be a resin molded article. That is, gate 100G is located in radial direction Y (that is, on the side) of molded resin 30 after molding. Specifically, molded resin 30 after molding includes protruding portion 32 as described above, and gate 100G is provided in a portion corresponding to protruding portion 32. Therefore, liquid resin 30L injected into mold 100 flows as indicated by an arrow in FIG. 8B.

At this time, since gate 100G is located beside the resin molded article (molded resin 30), liquid resin 30L flows around entire circumferential direction Z from a bottom to a top or from a top to a bottom. In particular, when liquid resin 30L flows upward from the bottom of stator 10, stator 10 is pushed by liquid resin 30L and tries to rise upward. However, in the present exemplary embodiment, since stator 10 is pressed from the top by pin 101 during the injection of liquid resin 30L, it is possible to suppress stator 10 from rising.

In the present exemplary embodiment, liquid resin 30L is injected into mold 100 by the direct gate. That is, the injection molding machine according to the present exemplary embodiment has a structure in which liquid resin 30L is directly injected into the resin molded portion (molded resin 30) of mold 100 from a sprue via gate 100G without passing through a runner.

Thereafter, when the inside of mold 100 is filled with liquid resin 30L, the flow of liquid resin 30L is stopped. When the filling of liquid resin 30L is completed, as shown in FIG. 8C, pin 101 is raised in a state where liquid resin 30L is melted. As a result, pin hole marks generated in liquid resin 30L by pins 101 are closed by liquid resin 30L.

Thereafter, although not illustrated, when the ascending of pin 101 is completed, liquid resin 30L is heated and cured to form molded resin 30. That is, liquid resin 30L is heated and cured in a state where pin 101 is raised. As a result, it is possible to form molded resin 30 in which stator 10, inner metal member 40, and second bracket 62 are fixed with resin.

Noted that, after that, molded motor 1 is completed by assembling other components such as rotor 20 to stator 10 covered with molded resin 30.

As described above, the method of manufacturing molded motor 1 according to the present exemplary embodiment includes the step (step S1) of disposing, in mold 100, stator 10 including stator core 11 and coil 12 wound around stator core 11, and inner metal member 40 disposed so as to cover an outer side of stator 10, and the step (step S2) of forming molded resin 30 by injecting liquid resin 30L into mold 100 through gate 100G which is a resin injection portion provided in mold 100, and curing liquid resin 30L. In the method of manufacturing molded motor 1 according to the present exemplary embodiment, the side gate method is adopted, and gate 100G as the resin injection portion is located in radial direction Y of molded resin 30 after molding.

As described above, by adopting the side gate method, even if inner metal member 40 is disposed so as to cover the outside of stator 10, it is possible to suppress a decrease in the strength of molded resin 30 and the like. This point will be described below.

As described above, by disposing inner metal member 40 so as to cover stator 10, it is possible to prevent fire from being ejected to the outside of the molded motor.

However, when inner metal member 40 and stator 10 are molded with molded resin 30, conventionally, inner metal member 40 and stator 10 are disposed in a mold, and liquid resin 30L is injected into the mold from above the mold to cure liquid resin 30L. In this case, if inner metal member 40 is disposed so as to cover the outside of stator 10, a gap between the outer surface of inner metal member 40 and the inner surface of the mold becomes narrower than the other portions. For this reason, when liquid resin 30L is injected into the mold, the escape of air in the mold is deteriorated. Moreover, if inner metal member 40 is not disposed, air leaks in radial direction Y from a gap between the stacked steel plates of stator core 11. However, when inner metal member 40 is disposed in close contact with the side surface of stator core 11, air hardly leaks from the gap between the stacked steel plates of stator core 11 to a portion located on the outer side in radial direction Y of inner metal member 40.

When inner metal member 40 is disposed as described above, air in the mold is less likely to escape when the liquid resin is injected from above the mold, or air is less likely to leak from the gap between the stacked steel plates of stator core 11. As a result, "su" may be generated in molded resin 30 in a portion located on the outer side in radial direction Y of inner metal member 40, and the strength of molded resin 30 in the portion located on the outer side in radial direction Y of inner metal member 40 may decrease. Specifically, when "su" is generated in a portion that can be seen from the outside, there is a concern that even molded motor 1 that does not affect the quality may appear to be poor in quality. When a large number of "su" are generated in protruding portion 32, the strength of protruding portion 32 may be reduced. When "su" is generated in the vicinity of a portion where a high voltage is ignited, there is a concern that a state in which an insulation distance cannot be secured may occur.

By the way, "su" is generated when bubbles are contained in liquid resin 30L at the time of injecting liquid resin 30L. When liquid resin 30L is cured in a state containing air bubbles, in cured molded resin 30, "su", which is a cavity, is generated in a portion where the air bubbles existed. Note that "su" may be referred to as "nest".

Therefore, in the method of manufacturing molded motor 1 according to the present exemplary embodiment, the side gate method is adopted, and gate 100G, which is the resin injection portion in mold 100, is located in radial direction Y of molded resin 30 after molding.

As a result, even if the gap between the outer surface of inner metal member 40 and the inner surface of mold 100 is narrower than other portions by disposing inner metal member 40, liquid resin 30L smoothly enters the gap between the outer surface of inner metal member 40 and the inner surface of mold 100 and easily wraps around. As a result, it is possible to suppress "su" from entering molded resin 30 in the portion located on the outer side in radial direction Y of inner metal member 40, so that it is possible to suppress a decrease in the strength of molded resin 30 in the portion located on the outer side in radial direction Y of inner metal member 40.

In particular, when inner metal member 40 including first portion 41 having an outer diameter larger than that of second portion 42 is disposed as in the present exemplary embodiment, a gap between the outer surface of inner metal member 40 and the inner surface of the mold is narrowed in a portion corresponding to first portion 41 having a large outer diameter. Therefore, "su" easily enters molded resin 30 in the portion corresponding to first portion 41. Moreover, when inner metal member 40 including first portion 41 having an outer diameter larger than that of second portion 42 is disposed, the thickness of molded resin 30 in the portion corresponding to first portion 41 having a large outer diameter becomes smaller than the thickness of molded resin 30 in the portion corresponding to second portion 42 having a small outer diameter. Therefore, a thin portion having a small thickness is generated in a part of molded resin 30. As described above, when not only "su" is generated in molded resin 30 but also a thin portion is formed, the strength of molded resin 30 further decreases.

On the other hand, in the method of manufacturing molded motor 1 according to the present exemplary embodiment, the side gate method is adopted as described above, and gate 100G as the resin injection portion is located in radial direction Y of molded resin 30 after molding.

As a result, even when inner metal member 40 including first portion 41 having an outer diameter larger than that of second portion 42 is disposed, it is possible to effectively suppress "su" from being generated in molded resin 30 in the portion of inner metal member 40 corresponding to first portion 41, and it is possible to suppress a decrease in the strength of molded resin 30 in the portion of inner metal member 40 corresponding to first portion 41.

Furthermore, in the method of manufacturing molded motor 1 according to the present exemplary embodiment, gate 100G as the resin injection portion is provided in a portion corresponding to protruding portion 32 of molded resin 30. That is, liquid resin 30L is injected from the portion of mold 100 corresponding to protruding portion 32.

Accordingly, liquid resin 30L injected into mold 100 does not directly flow into the gap between the outer surface of inner metal member 40 and the inner surface of mold 100, but passes through the portion of mold 100 corresponding to protruding portion 32 and then flows into the gap between the outer surface of inner metal member 40 and the inner surface of mold 100. As a result, the pressure of liquid resin 30L injected into mold 100 can be alleviated at the portion corresponding to protruding portion 32. Accordingly, liquid resin 30L can be more smoothly poured into the gap between the outer surface of inner metal member 40 and the inner surface of mold 100. Therefore, it is possible to further suppress "su" from being generated in molded resin 30 in the portion located on the outer side in radial direction Y of inner metal member 40, so that it is possible to further suppress a decrease in the strength of molded resin 30 in the portion located on the outer side in radial direction Y of inner metal member 40.

In addition, by injecting liquid resin 30L from the portion of mold 100 corresponding to protruding portion 32, even if protruding portion 32 protrudes to the outside and has a complicated shape, the portion of mold 100 corresponding to protruding portion 32 can be filled with liquid resin 30L without a gap. Conversely, when the liquid resin is injected from above the mold as in the conventional case, there is a case where the liquid resin does not flow around entire protruding portion 32, and the moldability is poor. As described above, by injecting liquid resin 30L from protruding portion 32, molded motor 1 having excellent moldability can also be manufactured.

Further, as in the present exemplary embodiment, by adopting the side gate method, a plurality of molded resins 30 can be simultaneously molded. That is, by adopting the side gate method, the plurality of molded resins 30 covering stator 10 and inner metal member 40 can be formed. This improves the productivity of molded motor 1.

Further, in the method of manufacturing molded motor 1 according to the present exemplary embodiment, liquid resin 30L may be injected into mold 100 not only from one portion corresponding to the side of molded resin 30 but also from a plurality of portions. That is, a plurality of gates 100G, which are resin injection portions, may be provided in mold 100 in the radial direction of molded resin 30 after molding. Accordingly, also in circumferential direction Z, the gap between the outer surface of inner metal member 40 and the inner surface of mold 100 can be uniformly filled with liquid resin 30L. Therefore, also in circumferential direction Z, it is possible to effectively suppress "su" from entering molded resin 30 in the portion located on the outer side in radial direction Y of inner metal member 40.

In this case, gates 100G are preferably provided at least at positions facing each other. That is, two gates G may be provided at intervals of 180° along circumferential direction Z. Further, the number of gates 100G may be three or more. In this case, the plurality of gates 100G may be provided at equal intervals along circumferential direction Z.

In the method of manufacturing molded motor 1 according to the present exemplary embodiment, during the injection of liquid resin 30L, pin 101 presses stator 10 from an upper side to a lower side in the vertical direction.

When the side gate method is adopted, stator 10 tends to rise by the injection of liquid resin 30L as described above, but the floating of stator 10 at the time of injection of liquid resin 30L can be suppressed by injecting liquid resin 30L while pressing stator 10 from the upper side to the lower side in the vertical direction by pin 101. As a result, molded resin 30 having a predetermined shape can be easily formed.

As described above, according to the method of manufacturing molded motor 1 according to the present exemplary embodiment, even when inner metal member 40 is disposed so as to cover the outside of stator 10, it is possible to suppress a decrease in strength of molded resin 30.

Molded motor 1 thus manufactured includes inner metal member 40 including first portion 41 located outside stator 10 in radial direction Y, and second portion 42 located outside stator 10 in radial direction Y and having a distance to rotating shaft 21 smaller than a distance from first portion 41 to rotating shaft 21. As described above, molded resin 30 is formed by curing liquid resin 30L injected from radial direction Y.

With this configuration, even when inner metal member 40 including first portion 41 having an outer diameter larger than that of second portion 42 is disposed, it is possible to suppress "su" from being generated in molded resin 30 in the portion located on the outer side in radial direction Y of inner metal member 40. Accordingly, it is possible to suppress a decrease in the strength of molded resin 30 in the portion located on the outer side in radial direction Y of inner metal member 40. Therefore, fire spreading due to ignition can be prevented without reducing the strength of molded resin 30.

Furthermore, according to experimental results of the present inventors, it has been found that the strength of molded resin 30 does not decrease when the thickness of molded resin 30 is 1 mm or more. Specifically, when a bulk molding compound (BMC) unsaturated polyester resin was used as a resin material of molded resin 30, a predetermined strength required for the molded motor could not be maintained when the thickness was less than 1 mm. However, when the thickness of molded resin 30 was 1 mm or more, the predetermined strength required for the molded motor could be maintained.

In addition, if molded resin 30 can be seen through, a user feels that the strength of molded resin 30 has decreased even though the strength of molded resin 30 has not actually decreased, which may give the user an unnecessary sense of uneasiness. However, it has been also found that when the thickness of molded resin 30 is 1 mm or more, molded resin 30 is not seen through, and when the thickness of molded resin 30 is less than 1 mm, molded resin 30 starts to be seen through. Note that, in molded motor 1 according to the present exemplary embodiment, the thickness of molded resin 30 at first portion 41 of inner metal member 40 is set to 2 mm.

In addition, if the thickness of molded resin 30 at the portion covering the side of stator 10 is 1 mm or more, step part 30a may not necessarily be provided on the side surface of molded resin 30. That is, when the thickness of molded resin 30 in the portion covering the side of stator 10 is 1 mm or more, the outer surface of molded resin 30 in the portion corresponding to first portion 41 of inner metal member 40 may not be positioned outside the outer surface of molded resin 30 in the other portion other than the portion corresponding to first portion 41 of inner metal member 40.

However, if the thickness of molded resin 30 at the portion covering the side of stator 10 is too thick, the outer size of molded motor 1 becomes large.

Therefore, the outer surface of molded resin 30 in the portion corresponding to first portion 41 of inner metal member 40 is preferably flush with the outer surface of first side wall portion 61b of first bracket 61 or located inside the outer surface of first side wall portion 61b. As a result, even if the thickness of molded resin 30 at the portion corresponding to first portion 41 of inner metal member 40 is increased, the outer size of molded motor 1 does not become larger than that of the molded motor illustrated in FIG. 10.

Note that, in molded motor 1 according to the present exemplary embodiment, the outer surface of molded resin 30 in the portion corresponding to first portion 41 of inner metal member 40 is flush with the outer surface of first side wall portion 61b of first bracket 61. This makes it possible to maintain the same outer diameter as that of the molded motor illustrated in FIG. 10. That is, the thickness of molded resin 30 in the portion corresponding to first portion 41 of inner metal member 40 can be increased to the maximum without increasing the outer size as compared with the molded motor illustrated in FIG. 10. Therefore, it is possible to achieve molded motor 1 having high reliability and excellent strength and being small.

As described above, the method of manufacturing molded motor 1 according to the present exemplary embodiment includes the steps of: disposing, in mold 100, stator 10 including stator core 11 and coil 12 wound around stator core 11, and inner metal member 40 disposed so as to cover the outside of stator 10; and forming molded resin 30 by injecting liquid resin 30L into mold 100 through resin injection portion 100G provided in mold 100, and curing liquid resin 30L. Resin injection portion 100G is located in the radial direction of molded resin 30 after molding.

Accordingly, even when inner metal member 40 is disposed so as to cover the outside of stator 10, it is possible to suppress a decrease in the strength of molded resin 30.

Furthermore, molded resin 30 after molding may include protruding portion 32 protruding outward in a radial direction orthogonal to a central axis direction of rotating shaft 21 of molded motor 1, and resin injection portion 100G may be provided in a portion corresponding to protruding portion 32.

Further, during the injection of liquid resin 30L, stator 10 is preferably pressed from an upper side to a lower side in a vertical direction by pin 101.

In addition, inner metal member 40 may include, in the radial direction, first portion 41 located outside stator 10, and second portion 42 located outside stator 10 and having a distance to rotating shaft 21 smaller than a distance from first portion 41 to rotating shaft 21.

Preferably, coil 12 includes coil end 12a protruding from stator core 11 in the direction along the central axis direction, first portion 41 faces coil end 12a, and second portion 42 faces stator core 11.

In addition, molded motor 1 of the present exemplary embodiment includes stator 10 having stator core 11 and coil 12 wound around stator core 11, rotor 20 disposed to face stator 10 and having rotating shaft 21 extending in the central axis direction, molded resin 30 covering the stator, first portion 41 positioned outside the stator 10 in the radial direction orthogonal to the central axis direction, and inner metal member 40 including second portion 42 positioned outside stator 10 in the radial direction and having a distance from rotating shaft 21 smaller than a distance from first portion 41 to rotating shaft 21, and having a portion positioned between molded resin 30 and stator 10. Molded resin 30 is formed by curing liquid resin 30L injected from the radial direction.

Accordingly, even when inner metal member 40 is disposed so as to cover the outside of stator 10, it is possible to suppress a decrease in the strength of molded resin 30.

Furthermore, there may be gate mark 30G when liquid resin 30L is injected into a side portion of molded resin 30 in the radial direction to mold molded resin 30.

Further, molded resin 30 may further include protruding portion 32 protruding outward in the radial direction, and molded resin 30 may be formed by curing liquid resin 30L injected from protruding portion 32.

In addition, gate mark 30G when liquid resin 30L is injected to mold molded resin 30 may be present in protruding portion 32.

Further, bracket 61 fixed to molded resin 30 may be further provided, bracket 61 may include first side wall portion 61b covering a side surface of molded resin 30, and at least a part of an outer surface of molded resin 30 corresponding to first portion 41 may be flush with an outer surface of first side wall portion 61b of bracket 61 or located inside the outer surface of first side wall portion 61b.

The molded motor may further include outer metal member 70 including lid portion 61a covering the outer surface of molded resin 30 located on a side of the central axis direction, and second side wall portion 72 covering a part of the outer surface of molded resin 30 located on a side of the radial direction, and out of the outer surface of molded resin 30 located on a side of the radial direction, at least a part of the outer surface that is not covered with second side wall portion 72 may be flush with an outer surface of second side wall portion 72 of outer metal member 70 or may be located inside the outer surface of second side wall portion 72.

The thickness of molded resin 30 at the portion corresponding to first portion 41 is preferably 1 mm or more.

Molded resin 30 may be made of an unsaturated polyester resin.

### (Modified example)

Although molded motor 1 according to the present disclosure has been described above based on the exemplary embodiment, the present disclosure is not limited to the exemplary embodiment.

For example, in the above exemplary embodiment, the outer surface of molded resin 30 in the portion corresponding to first portion 41 of inner metal member 40 is flush with the outer surface of first side wall portion 61b of first bracket 61 or located inside the outer surface of first side wall portion 61b, but the present disclosure is not limited thereto. Specifically, the outer surface of molded resin 30 in the portion corresponding to first portion 41 of inner metal member 40 may be flush with the outer surface of second side wall portion 72 of outer metal member 70 or located inside the outer surface of second side wall portion 72 of outer metal member 70. That is, out of the outer surface of molded resin 30 located on a side of radial direction Y, at least a part of the outer surface that is not covered with second side wall portion 72 of outer metal member 70 may be flush with an outer surface of second side wall portion 72 of outer metal member 70 or may be located inside the outer surface of second side wall portion 72 of outer metal member 70. From the viewpoint of increasing the strength of the side portion of molded resin 30 as much as possible, the position of the outer surface of molded resin 30 in the portion corresponding to first portion 41 of inner metal member 40 may be made as thick as possible with reference to the one having the larger outer diameter of the portion of outer metal member 70 and first bracket 61, which covers the side surface of molded resin 30.

In the above exemplary embodiment, rotor 20 is an IPM rotor, but the present disclosure is not limited thereto. For example, when a permanent magnet type rotor is used as rotor 20, a surface magnet type rotor (surface permanent magnet (SPM) rotor) in which a plurality of permanent magnets are provided on the outer surface of the rotor core may be used. Rotor 20 may have a configuration in which a bonded magnet is embedded in an embedded hole provided in the rotor core.

In the above exemplary embodiment, the number of magnetic poles of rotor 20 is 10 (that is, the number of permanent magnets 23 is 10), but the present disclosure is not limited thereto. Any number of magnetic poles of rotor 20 can be applied.

### INDUSTRIAL APPLICABILITY

The molded motor of the present disclosure can be used as a motor in various fields including a fan motor used for an air conditioner.

### REFERENCE MARKS IN THE DRAWINGS

1: molded motor
10: stator
11: stator core
11a: yoke
11b: tooth
11b1: extending portion
12: coil
12a: coil end
13: insulator
14: slot
20: rotor
21: rotating shaft
21a: output shaft
22: rotor core
22a: magnet insertion hole
23: permanent magnet
30: molded resin
30a: step part
30G: gate mark
30L: liquid resin
31: main body
31a: first opening
31b: second opening
32: protruding portion
40: inner metal member
40a: step part
41: first portion
42: second portion
51: first bearing
52: second bearing
61: first bracket (bracket)
61a, 71: lid portion
61b: first side wall portion
62: second bracket
70: outer metal member
72: second side wall portion
80: circuit board
81: electric wire
90: lead bush
100: mold
100G: gate (resin injection portion)
101: pin

## Claims

1. A method of manufacturing a molded motor (1), the method comprising:
disposing, in a mold (100), a stator including a stator core (11) and a coil (12) wound around the stator core (11), and an inner metal member (40) that covers an outer side of the stator (10); and
forming a molded resin (30) by injecting a liquid resin (30L) in a circumferential direction (Z) into the mold (100) through a resin injection portion provided in the mold (100), and curing the liquid resin,
wherein the resin injection portion (100G) is located in a radial direction (Y) of the molded resin (30) after molding in which the molded resin after molding is orthogonal to an axial direction (X) of a central axis (C) of a rotating shaft (21) of the molded motor (1),
wherein the molded resin (30) after molding includes a protruding portion (32) protruding outward in the radial direction (Y) from an outer surface of a main body (31), and wherein the resin injection portion is provided in a portion corresponding to the protruding portion so that the liquid resin flows around an entire circumferential direction (Z) which orbits the central axis (C).

2. The method of manufacturing the molded motor (1) according to Claim 1, wherein the stator is pressed by a pin from an upper side to a lower side in a vertical direction during injection of the liquid resin.

3. The method of manufacturing the molded motor (1) according to Claim 1 or 2, wherein the inner metal member (40) includes, in the radial direction (Y), a first portion located outside the stator, and a second portion located outside the stator and having a distance to the rotating shaft smaller than a distance from the first portion to the rotating shaft.

4. The method of manufacturing the molded motor (1) according to Claim 3, wherein the coil (12) includes a coil end protruding from the stator core (11) in a direction along the central axis direction (X), the first portion faces the coil end, and the second portion faces the stator core (11).

5. A molded motor (1) comprising:
a stator including a stator core (11), and a coil (12) wound around the stator core (11);
a rotor disposed opposite to the stator and including a rotating shaft (21) extending in an axial direction (X) of a central axis (C) of the rotating shaft (21);
a molded resin (30) covering the stator and including a protruding portion (32) protruding outward in the radial direction (Y) from an outer surface of a main body (31); and
an inner metal member (40) including a first portion located outside the stator in a radial direction (Y) orthogonal to the central axis direction (X), and a second portion located outside the stator in the radial direction (Y) and having a distance to the rotating shaft smaller than a distance from the first portion to the rotating shaft, the inner metal member (40) including a portion located between the molded resin (30) and the stator, wherein the molded resin (30) is formed by curing a liquid resin injected in a circumferential direction (Z) from the protruding portion so that the liquid resin flows around an entire circumferential direction (Z) which orbits the central axis (C).

6. The molded motor according to Claim 5, wherein a gate mark (30G) when the liquid resin (30L) is injected to mold the molded resin (30) is present at a portion on a side of the molded resin in the radial direction (Y).

7. The molded motor according to Claim 5 or 6, wherein a gate mark when the liquid resin is injected to mold the molded resin is present in the protruding portion.

8. The molded motor according to any one of Claims 5 to 7, further comprising a bracket (61) fixed to the molded resin (30),
wherein
the bracket (61) includes a first side wall portion (61b) that covers a side surface of the molded resin (30), and
at least a part of an outer surface of the molded resin (30) corresponding to the first portion (41) is flush with an outer surface of the first side wall portion (61b) of the bracket or located inside the outer surface of the first side wall portion (61b).

9. The molded motor according to any one of Claims 5 to 7, further comprising an outer metal member including a lid portion that covers an outer surface of the molded resin (30) located on a side of the central axis direction (X), and a second side wall portion that covers a part of the outer surface of the molded resin (30) located on a side of the radial direction (Y), wherein out of the outer surface of the molded resin (30) located on the side of the radial direction (Y), at least a part of the outer surface that is not covered with the second side wall portion is flush with an outer surface of the second side wall portion of the outer metal member or located inside the outer surface of the second side wall portion.

10. The molded motor according to any one of Claims 5 to 9, wherein a thickness of the molded resin (30) in a part corresponding to the first portion is 1 mm or more.

11. The molded motor according to any one of Claims 5 to 10, wherein the molded resin (30) is made of an unsaturated polyester resin.

12. A mold (100) for manufacturing the molded motor (1) of any of claims 5 to 11 by the method according to any of the claims 1 to 4, comprising
a resin injection portion located in a radial direction (Y) of the molded resin (30) after molding in which a molded resin (30) after molding is orthogonal to a central axis direction (X) of a rotating shaft (21) of a molded motor (1), the resin injection portion having a gate (100G),
wherein the mold (100) is configured to form:
a protruding portion (32) of the molded resin (30), the protruding portion (32) protruding outward in the radial direction (Y) from an outer surface of a main body (31); and
a gate mark (30G) of the molded resin (30) at a connection portion between the gate (100G) and the molded resin (30) and at a base part of the protruding portion (32) so that the resin injection portion allows a liquid resin (30L) to be injected in a circumferential direction (Z) through the gate (100G) so as to flow around an entire circumferential direction (Z).

## Patentansprüche

1. Verfahren zur Herstellung eines gegossenen Motors (1), wobei das Verfahren Folgendes umfasst:
in einer Form (100) wird ein Stator mit einem Statorkern (11) und einer um den Statorkern (11) gewickelten Spule (12) sowie einem inneren Metallelement (40) bereitgestellt, das eine Außenseite des Stators (10) bedeckt; und
ein Formharz (30) wird durch Einspritzen eines flüssigen Harzes (30L) in die Form (100) in einer Umfangsrichtung (Z) durch einen in der Form (100) vorgesehenen Harzeinspritzabschnitt und Aushärten des flüssigen Harzes geformt,
wobei der Harzeinspritzabschnitt (100G) in radialer Richtung (Y) des Formharzes (30) nach dem Formen angeordnet ist, wobei das Formharz nach dem Formen orthogonal zu einer axialen Richtung (X) einer Mittelachse (C) einer rotierenden Welle (21) des geformten Motors (1) verläuft,
wobei das Formharz (30) nach dem Formen einen in radialer Richtung (Y) von einer Außenfläche eines Hauptkörpers (31) nach außen ragenden Abschnitt (32) aufweist,
und wobei der Harzeinspritzabschnitt in einem dem ausragenden Abschnitt entsprechenden Bereich so angeordnet ist, dass das flüssige Harz in gesamter Umfangsrichtung (Z) um die Mittelachse (C) fließt.

2. Verfahren zur Herstellung des gegossenen Motors (1) nach Anspruch 1, wobei der Stator während des Einspritzens des flüssigen Harzes mittels eines Stifts von einer Oberseite zur Unterseite in vertikaler Richtung gepresst wird.

3. Verfahren zur Herstellung des gegossenen Motors (1) nach Anspruch 1 oder 2, wobei das innere Metallelement (40) in radialer Richtung (Y) einen ersten Abschnitt außerhalb des Stators und einen zweiten Abschnitt außerhalb des Stators aufweist, dessen Abstand zur rotierenden Welle kleiner ist als der Abstand des ersten Abschnitts zur rotierenden Welle.

4. Verfahren zur Herstellung des gegossenen Motors (1) nach Anspruch 3, wobei die Spule (12) ein Spulenende aufweist, das aus dem Statorkern (11) in Richtung der Mittelachse (X) herausragt, wobei der erste Abschnitt dem Spulenende und der zweite Abschnitt dem Statorkern (11) zugewandt ist.

5. Gegossener Motor (1), der umfasst:
einen Stator, mit einem Statorkern (11) und einer um den Statorkern (11) gewickelten Spule (12);
einen dem Stator gegenüberliegender Rotor mit einer rotierenden Welle (21), die sich in axialer Richtung (X) um eine Mittelachse (C) der rotierenden Welle (21) erstreckt;
ein Formharz (30), das den Stator umschließt und einen in radialer Richtung (Y) von einer Außenfläche eines Hauptkörpers (31) nach außen ragenden Abschnitt (32) aufweist; und
ein inneres Metallelement (40) mit einem ersten Abschnitt, der außerhalb des Stators in radialer Richtung (Y) senkrecht zur Mittelachsenrichtung (X) angeordnet ist, und einem zweiten Abschnitt, der ebenfalls außerhalb des Stators in radialer Richtung (Y) angeordnet ist und einen geringeren Abstand zur rotierenden Welle aufweist als der Abstand des ersten Abschnitts zur rotierenden Welle, wobei das innere Metallelement (40) einen Abschnitt aufweist, der zwischen dem Formharz (30) und dem Stator angeordnet ist,
wobei das Formharz (30) gebildet wird durch Aushärten eines flüssigen Harzes, das aus dem ausragenden Abschnitt in einer Umfangsrichtung (Z) so eingespritzt wird, dass das flüssige Harz um eine gesamte Umfangsrichtung (Z) herum fließt, welche die Mittelachse (C) umrundet.

6. Gegossener Motor nach Anspruch 5, bei dem sich an einer Seite des Formteils in radialer Richtung (Y) eine Angussmarke (30G) befindet, die beim Einspritzen des flüssigen Harzes (30L) zum Formen des Formteils (30) entsteht.

7. Gegossener Motor nach Anspruch 5 oder 6, wobei im vorstehenden Teil eine Angussmarke vorhanden ist, die beim Einspritzen des flüssigen Harzes zum Formen des Formteils entsteht.

8. Gegossener Motor nach einem der Ansprüche 5 bis 7, der ferner eine an dem Formteil (30) befestigte Halterung (61) umfasst,
wobei
die Halterung (61) einen ersten Seitenwandabschnitt (61b) umfasst, der eine Seitenfläche des Formteils (30) abdeckt, und
mindestens ein Teil der Außenfläche des Formharzes (30), der dem ersten Abschnitt (41) entspricht, bündig mit der Außenfläche des ersten Seitenwandabschnitts (61b) der Halterung abschließt oder sich innerhalb der Außenfläche des ersten Seitenwandabschnitts (61b) befindet.

9. Gegossener Motor nach einem der Ansprüche 5 bis 7, der ferner ein äußeres Metallelement mit einem Deckelabschnitt umfasst, der eine Außenfläche des Formteils (30) auf einer Seite der Mittelachsenrichtung (X) abdeckt, und einem zweiten Seitenwandabschnitt, der einen Teil der Außenfläche des Formteils (30) auf einer Seite der radialen Richtung (Y) abdeckt, wobei von der Außenfläche des Formteils (30) auf der Seite der radialen Richtung (Y) mindestens ein Teil der Außenfläche, der nicht vom zweiten Seitenwandabschnitt abgedeckt ist, bündig mit der Außenfläche des zweiten Seitenwandabschnitts des äußeren Metallelements abschließt oder sich innerhalb der Außenfläche des zweiten Seitenwandabschnitts befindet.

10. Gegossener Motor nach einem der Ansprüche 5 bis 9, wobei die Dicke des Formharzes (30) in einem dem ersten Abschnitt entsprechenden Teil 1 mm oder mehr beträgt.

11. Gegossener Motor nach einem der Ansprüche 5 bis 10, wobei das Formharz (30) aus einem ungesättigten Polyesterharz besteht.

12. Form (100) zur Herstellung des gegossenen Motors (1) eines der Ansprüche 5 bis 11 nach dem Verfahren gemäß einem der Ansprüche 1 bis 4, die umfasst:
einen in radialer Richtung (Y) des Formharzes (3) nach dem Formen angeordneten Harzeinspritzabschnitt, wobei das Formharz (30) nach dem Formen orthogonal zur Mittelachsenrichtung (X) einer rotierenden Welle (21) eines geformten Motors (1) steht, wobei der Harzeinspritzabschnitt einem Anguss (100 G) hat,
wobei die Form (100) so konfiguriert ist, dass sie Folgendes ausformt:
einen ausragenden Teil (32) des Formharzes (30), wobei der ausragende Teil (32) von einer äußeren Oberfläche eines Hauptkörpers (31) in radialer Richtung (Y) nach außen ragt; und
eine Angussmarke (30G) des Formharzes (30) an einem Verbindungsabschnitt zwischen dem Anguss (100 G) und dem Formharz (30), und an einem Basisteil des ausragenden Abschnitts (32), so dass der Harzeinspritzabschnitt es ermöglicht, ein flüssiges Harz (30L) so in einer Umfangsrichtung (Z) durch den Anguss (100G) einzuspritzen, dass es in einer gesamten Umfangsrichtung (Z) fließt.

## Revendications

1. Procédé de fabrication d'un moteur moulé (1), ledit procédé comprenant :
la mise en place, dans un moule (100), d'un stator comprenant un noyau de stator (11) et une bobine (12) enroulée autour du noyau de stator (11), ainsi que d'un élément métallique intérieur (40) qui recouvre une face extérieure du stator (10), et
la formation d'une résine moulée (30) par injection d'une résine liquide (30L) dans une direction circonférentielle (Z) à l'intérieur du moule (100) à travers une portion d'injection de résine prévue dans le moule (100), et par durcissement de la résine liquide ;
la portion d'injection de résine (100G) étant située dans une direction radiale (Y) de la résine moulée (30) après moulage dans laquelle la résine moulée après moulage est orthogonale à la direction axiale (X) d'un axe central (C) d'un arbre rotatif (21) du moteur moulé (1),
la résine moulée (30) après moulage comprenant une portion saillante (32) faisant saillie vers l'extérieur dans la direction radiale (Y) à partir d'une surface extérieure d'un corps principal (31), et
la portion d'injection de résine étant prévue dans une portion correspondant à la portion saillante, si bien que la résine liquide s'écoule sur toute la direction circonférentielle (Z) qui entoure l'axe central (C).

2. Procédé de fabrication du moteur moulé (1) selon la revendication 1,
dans lequel le stator est pressé par une broche à partir d'un côté supérieur vers un côté inférieur dans une direction verticale pendant l'injection de la résine liquide.

3. Procédé de fabrication du moteur moulé (1) selon la revendication 1 ou 2, dans lequel l'élément métallique intérieur (40) comprend, dans la direction radiale (Y), une première portion située à l'extérieur du stator, et une deuxième portion située à l'extérieur du stator et présentant une distance par rapport à l'arbre rotatif inférieure à la distance entre la première portion et l'arbre rotatif.

4. Procédé de fabrication du moteur moulé (1) selon la revendication 3,
dans lequel la bobine (12) comprend une extrémité de bobine faisant saillie du noyau de stator (11) dans une direction parallèle à la direction d'axe central (X), la première portion fait face à l'extrémité de bobine, et la deuxième portion fait face au noyau de stator (11).

5. Moteur moulé (1) comprenant :
un stator comprenant un noyau de stator (11) et une bobine (12) enroulée autour du noyau de stator (11),
un rotor disposé à l'opposé du stator et comprenant un arbre rotatif (21) s'étendant dans la direction axiale (X) d'un axe central (C) de l'arbre rotatif (21),
une résine moulée (30) recouvrant le stator et comprenant une portion saillante (32) faisant saillie vers l'extérieur dans la direction radiale (Y) à partir d'une surface extérieure d'un corps principal (31), et
un élément métallique intérieur (40) comprenant une première portion située à l'extérieur du stator dans une direction radiale (Y) orthogonale à la direction d'axe central (X) et une deuxième portion située à l'extérieur du stator dans la direction radiale (Y) et présentant une distance par rapport à l'arbre rotatif inférieure à la distance entre la première portion et l'arbre rotatif, l'élément métallique intérieur (40) comprenant une portion située entre la résine moulée (30) et le stator ;
la résine moulée (30) étant formée par durcissement d'une résine liquide injectée dans une direction circonférentielle (Z) à partir de la portion saillante, si bien que la résine liquide s'écoule sur toute la direction circonférentielle (Z) qui entoure l'axe central (C).

6. Moteur moulé selon la revendication 5, dans lequel une trace de carotte (30G) résultant de l'injection de la résine liquide (30L) servant au moulage de la résine moulée (30) est présente au niveau d'une portion située sur un côté de la résine moulée dans la direction radiale (Y).

7. Moteur moulé selon la revendication 5 ou 6, dans lequel une trace de carotte résultant de l'injection de la résine liquide servant au moulage de la résine moulée est présente dans la partie saillante.

8. Moteur moulé selon l'une quelconque des revendications 5 à 7, comprenant en outre un support (61) fixé à la résine moulée (30),
étant entendu que
le support (61) comprend une première portion de paroi latérale (61b) qui recouvre une surface latérale de la résine moulée (30), et
au moins une partie d'une surface extérieure de la résine moulée (30) correspondant à la première portion (41) affleure la surface extérieure de la première portion de paroi latérale (61b) du support ou est située sur l'intérieur de la surface extérieure de la première portion de paroi latérale (61b).

9. Moteur moulé selon l'une quelconque des revendications 5 à 7, comprenant en outre un élément métallique extérieur comprenant une portion de couvercle qui recouvre une surface extérieure de la résine moulée (30) située sur un côté de la direction d'axe central (X), et une deuxième portion de paroi latérale qui recouvre une partie de la surface extérieure de la résine moulée (30) située sur un côté de la direction radiale (Y), étant entendu que, sur la surface extérieure de la résine moulée (30) située sur le côté de la direction radiale (Y), au moins une partie de la surface extérieure qui n'est pas recouverte par la deuxième portion de paroi latérale affleure la surface extérieure de la deuxième portion de paroi latérale de l'élément métallique extérieur ou est située sur l'intérieur de la surface extérieure de la deuxième portion de paroi latérale.

10. Moteur moulé selon l'une quelconque des revendications 5 à 9, dans lequel l'épaisseur de la résine moulée (30) dans une partie correspondant à la première portion est d'au moins 1 mm.

11. Moteur moulé selon l'une quelconque des revendications 5 à 10, dans lequel la résine moulée (30) est constituée d'une résine polyester insaturée.

12. Moule (100) pour la fabrication du moteur moulé (1) selon l'une quelconque des revendications 5 à 11 suivant le procédé selon l'une quelconque des revendications 1 à 4, comprenant
une portion d'injection de résine située dans la direction radiale (Y) de la résine moulée (30) après moulage, dans laquelle la résine moulée (30) après moulage est orthogonale à la direction d'axe central (X) d'un arbre rotatif (21) d'un moteur moulé (1), la portion d'injection de résine présentant une carotte (100G),
le moule (100) étant conçu pour former :
une portion saillante (32) de la résine moulée (30), ladite portion saillante (32) faisant saillie vers l'extérieur dans la direction radiale (Y) à partir d'une surface extérieure d'un corps principal (31), et
une trace de carotte (30G) de la résine moulée (30) au niveau d'une portion de liaison entre la carotte (100G) et la résine moulée (30) et au niveau d'une partie de base de la portion saillante (32), si bien que la portion d'injection de résine permette à une résine liquide (30L) d'être injectée dans une direction circonférentielle (Z) à travers la carotte (100G) de façon à s'écouler sur toute la direction circonférentielle (Z).
